# EUROPEAN PATENT SPECIFICATION

(11) **EP 4 597 342 B1**
(45) Date of publication and mention of the grant of the patent: **28.10.2026**
(21) Application number: 25153825.2
(22) Date of filing: 24.01.2025
(51) Int. Cl.: G06F 21/31

(54) **IMAGE FORMING APPARATUS AND USER AUTHENTICATION METHOD**
BILDERZEUGUNGSVORRICHTUNG UND BENUTZERAUTHENTIFIZIERUNGSVERFAHREN
APPAREIL DE FORMATION D'IMAGES ET PROCÉDÉ D'AUTHENTIFICATION D'UTILISATEUR

(30) Priority: 01.02.2024 JP 2024014311
(43) Date of publication of application: 06.08.2025
(73) Proprietor: Sharp Kabushiki Kaisha, Sakai City, Osaka 590-8522 (JP)
(72) Inventor: NODA, Shoji, Sakai City, Osaka 590-8522 (JP)
(74) Representative: Müller Hoffmann & Partner

(56) References cited:
- JP-A- 2010 061 579
- US-A1- 2023 351 008

## Description

### BACKGROUND OF THE INVENTION

### Field of the Invention

The present disclosure relates to an image forming apparatus and the like. The present application is based on Japanese Patent Application No. 2024-014311 filed on February 1, 2024.

### Description of the Background Art

In recent years, in order to enhance security in authentication processing in an image forming apparatus, uniqueness has been required for a password related to user authentication.

In a general image forming apparatus, in association with authentication processing using authentication information such as a password input by a user, which of user categories of a general user, an administrator user, and a maintenance user the user belongs to is identified (refer to Patent Document 1).

Another example for an image forming apparatus is provided in US 2023/351008 A1.

An object of the present disclosure is to provide an image forming apparatus and the like capable of enhancing security in authentication processing of a maintenance user in the image forming apparatus.

### PRIOR ART DOCUMENT

### PATENT DOCUMENT

Patent Document 1: Japanese Unexamined Patent Publication No. 2010-061579

### SUMMARY OF THE INVENTION

The above object is solved by the claimed subject-matter that defines the present invention.

According to the present disclosure, an image forming apparatus and the like capable of enhancing security in authentication processing of a maintenance user in the image forming apparatus can be provided.

### BRIEF DESCRIPTION OF THE DRAWINGS

FIG. 1 is a diagram illustrating an overall configuration of an image forming apparatus according to a first embodiment.
FIG. 2 is a diagram illustrating a functional configuration of the image forming apparatus according to the first embodiment.
FIG. 3 is a diagram illustrating setting information stored in a setting information storage area.
FIG. 4 is a diagram illustrating a processing flow according to the first embodiment.
FIG. 5A is a diagram illustrating a conventional art.
FIG. 5B is a diagram illustrating the conventional art.
FIG. 5C is a diagram illustrating the conventional art.
FIG. 6 is a diagram illustrating an operation example according to the first embodiment.
FIG. 7 is a diagram illustrating an operation example according to the first embodiment.
FIG. 8 is a diagram illustrating an operation example according to the first embodiment.
FIG. 9A is a diagram illustrating an operation example according to the first embodiment.
FIG. 9B is a diagram illustrating an operation example according to the first embodiment.
FIG. 10A is a diagram illustrating an operation example according to a second embodiment.
FIG. 10B is a diagram illustrating an operation example according to the second embodiment.
FIG. 10C is a diagram illustrating an operation example according to the second embodiment.

### DESCRIPTION OF THE PREFERRED EMBODIMENTS

Hereinafter, embodiments of the present disclosure will be described with reference to the drawings. In the present disclosure, a multifunction peripheral capable of realizing jobs related to, for example, copying, faxing, e-mailing, and the like in one housing will be described as one form of an image forming apparatus according to the present disclosure. The following embodiments are examples for describing the present disclosure, and the technical content of the description recited in the claims is not limited to the following description.

In Europe, the United States, and Asian countries including Japan, legal regulations for enhancing security for Internet of Things (IoT) devices have been developed. Some of image forming apparatuss put on the market in these regions, countries, and the like are required to comply with the legal regulations, and require a user to set necessary device settings.

For example, the Product Security and Telecommunications Infrastructure Bill Act (PSTI Act) in the United Kingdom prohibits the use of a default password or an easy-to-guess password for a terminal device that can be connected to the Internet, and uniqueness of a password to be used is required.

Against such momentum, in enhancing security for authentication processing using a password of a general user, an administrator user, or the like, countermeasures are taken, for example, a change from a default (or unset) password is surely mandated in an initial setting wizard at the time of initial activation or the like of an image forming apparatus.

However, for authentication processing using a password of a maintenance user, currently, there is no countermeasure equivalent to the security enhancement for the authentication processing of the general user, the administrator user, or the like.

Here, the general user according to the present disclosure is a user to whom an operation privilege for using a function realized by the image forming apparatus is given. The administrator user is a user to whom an operation privilege for operating the image forming apparatus, such as a user management setting, a network setting, a hardware setting, and a system setting, is given in addition to the operation privilege of the general user. In the present disclosure, the general user or the administrator user may be referred to as an end user. Unlike the end user, in the present disclosure, a user who belongs to a manufacturer, a distributor (agent), a device management department of a company or an organization, or the like of the image forming apparatus and performs maintenance and management of the image forming apparatus is referred to as a maintenance user (non-end user).

In the present disclosure, an image forming apparatus and the like capable of enhancing security in authentication processing of a maintenance user in the image forming apparatus is realized by the following embodiments.

### 1 First Embodiment

In a first embodiment, a form of a multifunction peripheral will be described as an example of an image forming apparatus 10. However, the image forming apparatus 10 may be a printer, a copier, a FAX machine, or the like which limits a job function, in addition to the multifunction peripheral.

### 1.1 Functional Configuration

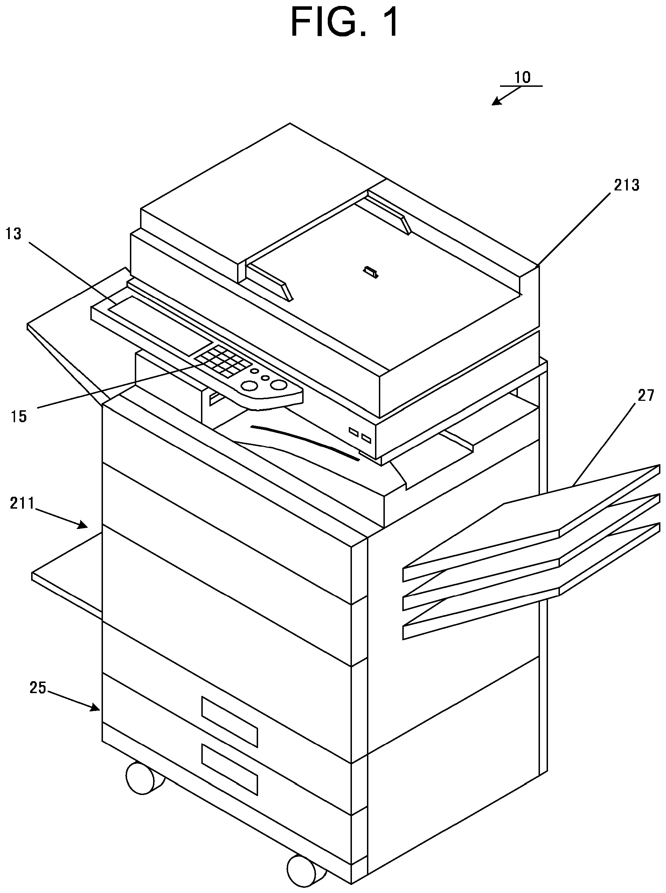

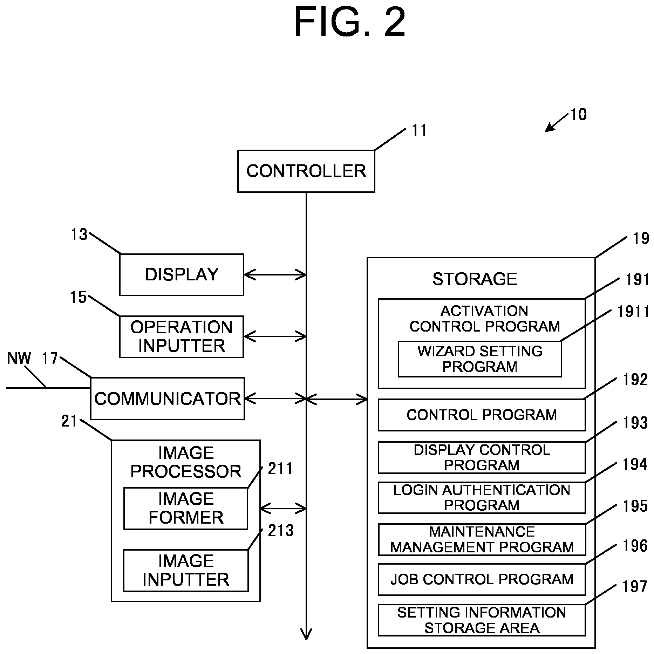

FIG. 1 is a diagram illustrating an overall configuration of the image forming apparatus 10 according to the first embodiment. FIG. 2 is a functional configuration diagram of the image forming apparatus 10.

The image forming apparatus 10 includes, as a functional configuration, a controller 11, a display 13, an operation inputter 15, a communicator 17, a storage 19, and an image processor 21.

The controller 11 entirely controls the image forming apparatus 10. The controller 11 can be configured by one or more processing devices (for example, a central processing unit (CPU), a system on chip (SoC), and the like). The controller 11 reads and executes various programs stored in the storage 19 to realize the functions thereof.

The display 13 is a display device that displays various types of information to a user or the like. The display 13 can be configured by, for example, a liquid crystal display (LCD), an organic electro-luminescence (EL) display, or the like. The display 13 displays, for example, a login screen for accepting input of authentication information (login name and password) of a user who attempts to log in to the image forming apparatus 10, a setting screen related to an initial setting wizard, and the like, in addition to display of operation screens such as a home screen (not illustrated) and a setting screen related to execution of each job, on the basis of control by the controller 11 that has read a display control program 193 described below.

The operation inputter 15 is an input device that accepts input of information by a user or the like. The operation inputter 15 can be configured by, for example, various input devices such as operation keys such as hardware keys and software keys, and buttons. The operation inputter 15 can also be configured as a touch panel that enables input via the display 13. When the operation inputter 15 is configured as a touch panel, the operation inputter 15 can detect user's touch, tap, swipe operations, and the like with respect to an object displayed via the display 13, and acquire coordinate information, pressure-sensitive information, and the like, on the touch panel. In this case, as an input method of the touch panel, for example, a general input method such as a resistive film method, an infrared method, an electromagnetic induction method, or a capacitance method can be adopted.

The communicator 17 includes, for example, one or both of a wired interface and a wireless interface for communicating with another terminal device (not illustrated) via a network NW such as a local area network (LAN), a wide area network (WAN), the Internet, a telephone line, or a FAX line. In addition, the communicator 17 may include, for example, an interface related to a wireless communication technology such as Bluetooth (Registered Trademark), near field communication (NFC), Wi-Fi (Registered Trademark), ZigBee (Registered Trademark), infrared data association (IrDA), or wireless universal serial bus (USB).

The storage 19 is one or more storage devices that store various programs and various types of data necessary for operation of the image forming apparatus 10. The storage 19 can be configured by, for example, a storage device such as a random access memory (RAM), a solid state drive (SSD), a hard disk drive (HDD), or a read only memory (ROM).

In the first embodiment, the storage 19 stores an activation control program 191, a control program 192, the display control program 193, a login authentication program 194, a maintenance management program 195, and a job control program 196, and secures a setting information storage area 197.

The activation control program 191 is a program that is read by the controller 11 at the time of activation of the image forming apparatus 10. The controller 11 that has read the activation control program 191 controls activation processing of the image forming apparatus 10. The activation control program 191 may be included in, for example, boot firmware or main firmware that is activated on the basis of verification by the boot firmware. In order to realize the secure boot, the activation control program 191 may be stored in another storage device (storage area) (not illustrated) different from the storage 19, or may be stored in another terminal device (not illustrated) on the network NW.

The activation control program 191 includes a wizard setting program 1911. The controller 11 reads the wizard setting program 1911 when the image forming apparatus 10 needs an initial setting, for example, when the image forming apparatus 10 is activated for the first time (first activation) after power-on or when the image forming apparatus 10 is activated for the first time after initialization of the storage 19.

The wizard setting program 1911 is a program that is read by the controller 11 in performing the initial setting necessary for driving the device at the time of the first activation after the power-on or at the time of the activation after the initialization of the device. The controller 11 that has read the wizard setting program 1911 proceeds with the initial setting while displaying, on the display 13 (the operation inputter 15), an operation screen for assisting the initial setting and accepting input of a device setting.

The control program 192 is a program that is read by the controller 11 after the activation of the device based on the activation control program 191. The controller 11 that has read the control program 192 functions as an operating system (OS), and controls driving of hardware such as the display 13, the operation inputter 15, the communicator 17, and the image processor 21. The controller 11 that has read the control program 192 controls the operation of the image forming apparatus 10 in accordance with a user category of a user who has logged in.

The display control program 193 is a program that is read by the controller 11 in performing output control of an operation screen that is displayed by the display 13 or the operation inputter 15 configured as a touch panel. The controller 11 that has read the display control program 193 controls display of the display 13 (the operation inputter 15).

The login authentication program 194 is a program that is read by the controller 11 so as to authenticate a user who attempts to log in to the image forming apparatus 10. The controller 11 reads the login authentication program 194 to enable a user authentication function. For example, the login authentication program 194 may be automatically read at the time of the activation of the device, or the login authentication program 194 may be read when an operation button for switching enabled and disabled (on and off) of the user authentication function is provided on a system setting screen or the like and the operation button is selected by the user.

The controller 11 that has read the login authentication program 194 displays a login screen described below on the display 13. The controller 11 stores in advance a login name and a login password in association with each other in the setting information storage area 197 described below, and performs authentication processing of a user by verifying the login name and the login password input via the login screen.

The maintenance management program 195 is a program that is read by the controller 11 when the user category of the user who has logged in to the image forming apparatus 10 is a maintenance user. The controller 11 that has read the maintenance management program 195 provides a function necessary for maintenance management of the image forming apparatus 10 by the maintenance user (for example, printing of a test page or management of a job, a system log, or the like) via a maintenance (maintenance management) screen described below.

The job control program 196 is a program that is read by the controller 11 when a printing job related to printing or copying, or a transmission job related to FAX or image transmission is executed. The controller 11 that has read the job control program 196 shifts to a job mode (a printing mode, a copying mode, a FAX mode, an image transmission mode, or the like) for executing each job, and executes the job. In the execution of the job, the controller 11 can display, on the touch panel, an operation screen for accepting selection of a setting value or a function necessary for the execution of the job from the user as necessary. The controller 11 can execute the job on the basis of the setting value or the function accepted via the operation screen.

The setting information storage area 197 is a storage area for storing the device setting of the image forming apparatus 10. Setting information that can be stored in the setting information storage area 197 can include, for example, a user management item for managing authentication information of a user and a setting item of authentication processing for a maintenance user.

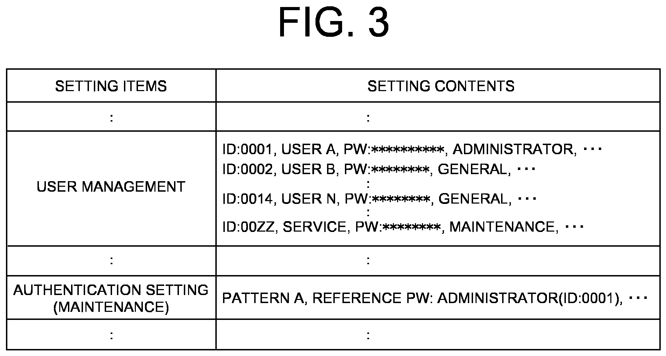

Here, setting items stored in the setting information storage area 197 will be described with reference to FIG. 3. FIG. 3 is a diagram illustrating an example of a setting information table for managing the setting information stored in the setting information storage area 197. The setting information stored in the setting information storage area 197 may be managed in a database format.

The setting information table illustrated in FIG. 3 is an example in which, as the setting items, the user management item and the setting item of the authentication processing for a maintenance user are extracted. Needless to say, in addition to these pieces of information, the setting information table can also manage setting information related to, for example, a network setting, a hardware setting, and a system setting.

The user management item is a setting item for managing a user who operates the image forming apparatus 10, and includes, as setting contents, an ID, a login name, a login password (PW), and a user category, for example.

The ID is an identifier for uniquely identifying a user of the image forming apparatus 10. The login name represents a login name of the user. The login password (PW) is a login password associated with the login name. The user category represents an operation privilege given to the user who has logged in to the image forming apparatus 10.

For example, the user identified by the ID "0001" has the login name of "user A," and the password necessary for login authentication of "**********." The operation privilege of "user A" is "administrator user." Moreover, the user identified by the ID "0014" has the login name of "user N," and the password necessary for login authentication of "********." The operation privilege of "user N" is "general user."

On the other hand, the user identified by the ID "00ZZ" has the login name of "service," and the password necessary for login authentication of "********." The operation privilege of "service" is "maintenance user."

The setting item of the authentication processing for a maintenance user is a setting item related to the authentication processing for a maintenance user, and includes a pattern identifier and a reference password (PW).

Here, as the authentication processing for a maintenance user, the following two patterns will be described.

Pattern A: A password of an administrator user is set as a password of a maintenance user (maintenance password), and the administrator user is requested to input the password at the time of login authentication of the maintenance user.

Pattern B: A password that can be confirmed only by an administrator user (for example, a random password in which character strings constituting the password are arranged at random) is set as a password of a maintenance user (maintenance password), and the administrator user is requested to confirm (input) the password at the time of login authentication of the maintenance user.

In both the authentication processing according to Pattern A and the authentication processing according to Pattern B, when the maintenance user logs in to the image forming apparatus 10 (for the first time), the maintenance user requests authentication assistance for the administrator user. Therefore, the security of the image forming apparatus 10 can be enhanced by applying the authentication processing according to either Pattern A or Pattern B to the login authentication processing for the maintenance user.

FIG. 3 illustrates a state in which "Pattern A" is set as the authentication processing for the maintenance user, and at this time, the password set as the maintenance password is the password related to "administrator (ID: 0001)."

Whether to apply the authentication processing of Pattern A or Pattern B as the authentication processing for the maintenance user can be set in advance, for example, before the initial setting wizard is activated (for example, at the time of factory shipment). Then, by automatically applying the maintenance password according to either Pattern A or Pattern B set in advance after the completion of the initial setting wizard processing, the time and effort and the attention of the end user who actually engages in the initial setting wizard processing can be saved.

Referring back to FIG. 2, the image processor 21 includes an image former 211 and an image inputter 213. The image former 211 supplies a paper sheet from a sheet feeder 25, forms an image based on image data on the paper sheet, and then discharges the paper sheet to a sheet discharger 27. The image former 211 can be configured by, for example, a laser printer using an electrophotographic method. In this case, the image former 211 forms images by using toner supplied from toner cartridges (not illustrated) corresponding to toner colors (for example, cyan, magenta, yellow, and black).

The image inputter 213 generates image data by scanning a document. The image inputter 213 can be configured as a scanner device including, in addition to an image sensor such as a charge coupled device (CCD) or a contact image sensor (CIS), an automatic document feeder (ADF), a flatbed for placing and reading a document, and the like. The configuration of the image inputter 213 is not particularly limited as long as a reflected light image from a document image can be read by the image sensor. The image inputter 213 can also be configured as an interface capable of acquiring, for example, image data stored in a storage medium such as a USB memory or image data transmitted from a terminal device (not illustrated). The image processor 21 may perform, for example, shading correction and density correction on the image data input from the image inputter 213 to generate image data for image transmission.

### 1.2 Processing Flow

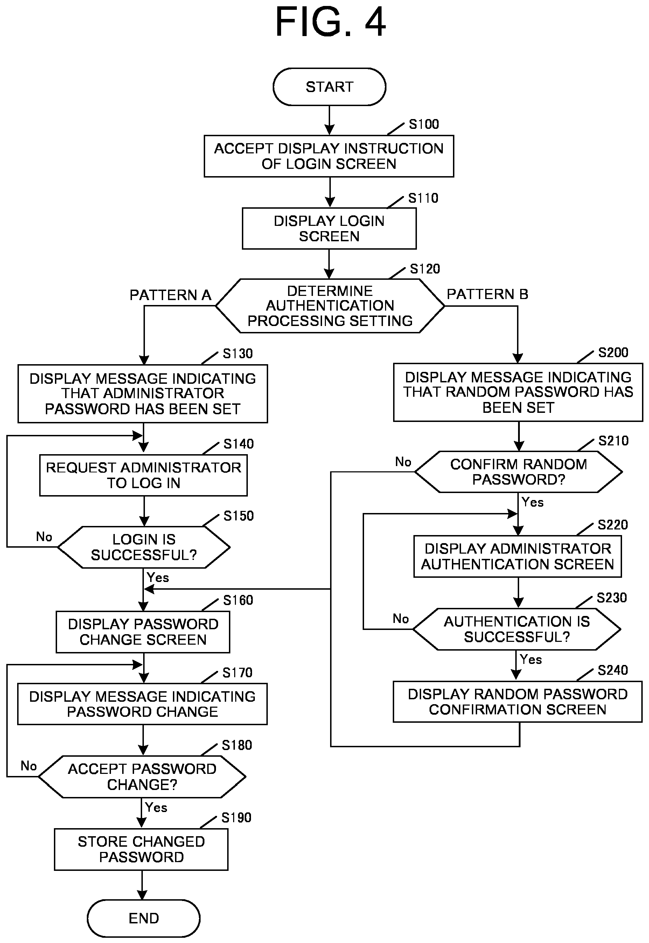

Next, a processing flow according to the first embodiment will be described. FIG. 4 is a flowchart illustrating authentication processing from login authentication to a password change by a maintenance user according to the first embodiment. The processing described in FIG. 4 is processing executed by reading the control program 192, the display control program 193, the login authentication program 194, the maintenance management program 195, and the like.

First, the controller 11 accepts a display instruction of a login screen when the image forming apparatus 10 is activated (regardless of whether the image forming apparatus 10 is activated for the first time after power-on), when the image forming apparatus 10 wakes up from sleep mode, or the like (step S100).

When the display instruction of a login screen is accepted, the controller 11 displays a login screen on the display 13 (the operation inputter 15) (step S110).

Next, the controller 11 determines authentication processing for a maintenance user by referring to the device setting stored in the setting information storage area 197 illustrated in FIG. 3 (step S120). In step S120, when a login name input to the login screen is the login name of the maintenance user "service," processing in step S130 and subsequent steps may be executed. In this case, when the login name input to the login screen is an end user (a general user or an administrator user), the processing in step S130 and the subsequent steps may be omitted, and the screen may transition to a home screen or a job setting screen (not illustrated).

When the authentication processing set for the maintenance user is determined to be Pattern A, the controller 11 displays a message indicating that the password of the administrator user (administrator password) has been set as the maintenance password, and requests the administrator user to log in to the image forming apparatus 10 (step S120; Pattern A → step S130 → step S140).

The controller 11 determines whether login to the image forming apparatus 10 by the administrator user is successful. When it is determined that the login is successful, the controller 11 causes the screen to transition to a maintenance password change screen (step S150; Yes → step S160). On the other hand, when it is determined that the login is not successful, the controller 11 returns the processing to step S140 (step S150; No → step S140).

The controller 11 displays a message prompting the maintenance user to change the maintenance password (step S 170). Then, when the change of the maintenance password by the maintenance user is accepted, the controller 11 stores the changed password as a new maintenance password and ends the processing (step S180; Yes → step S190). When the change of the maintenance password by the maintenance user is not accepted, the controller 11 continues the display for prompting the change of the maintenance password (step S180; No → step S 170). At this time, the controller 11 may restrict the screen transition to another maintenance screen until the maintenance password is changed.

Meanwhile, when the authentication processing set for the maintenance user is determined to be Pattern B, the controller 11 displays a message indicating that the random password that can be confirmed only by the administrator user has been set as the maintenance password (step S120; Pattern B; → step S200).

Next, the controller 11 determines whether a confirmation instruction of the random password by the maintenance user has been accepted. When it is determined that a confirmation instruction of the random password by the maintenance user has been accepted, the controller 11 displays an authentication screen for the administrator user (administrator authentication screen) (step S210; Yes → step S220). On the other hand, when it is determined that a confirmation instruction of the random password by the maintenance user has not been accepted, the controller 11 shifts the processing to step S160 (step S210; No → step S160).

The controller 11 determines whether authentication of the administrator user via the displayed administrator authentication screen is successful. When it is determined that authentication of the administrator user is successful, the controller 11 displays a random password confirmation screen including the random password (step S230; Yes → step S240). When the confirmation of the random password by the administrator user is completed, the controller 11 shifts the processing to step S160. In this case, the controller 11 may accept input of the random password by the administrator user, and, when the accepted random password matches the random password displayed on the random password confirmation screen, may shift the processing to step S160. In addition, when the change of the maintenance password by the maintenance user is accepted, the controller 11 ends the display of the random password confirmation screen.

### 1.3 Operation Example

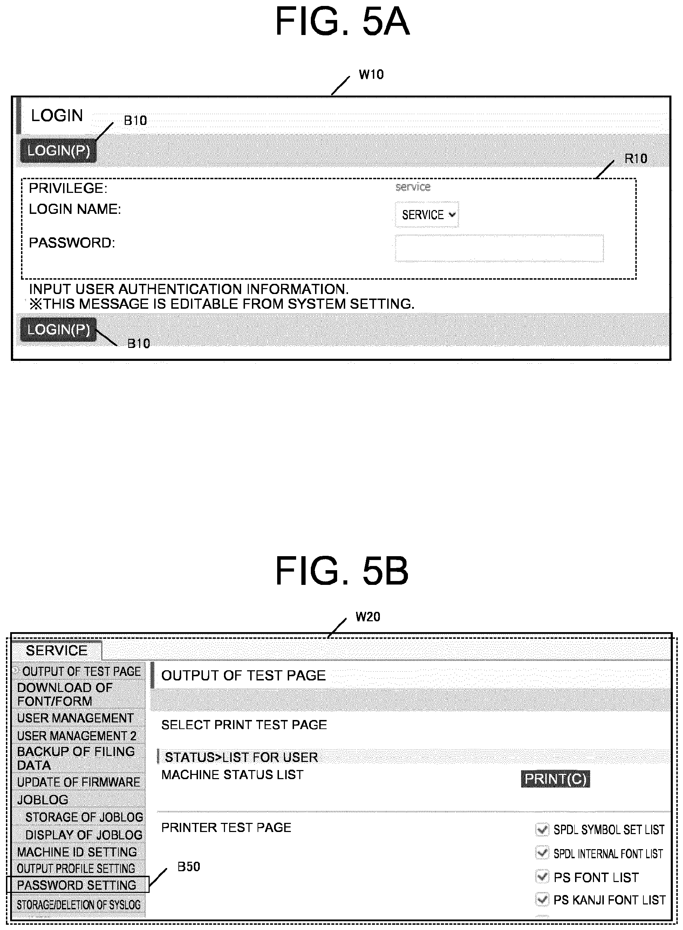

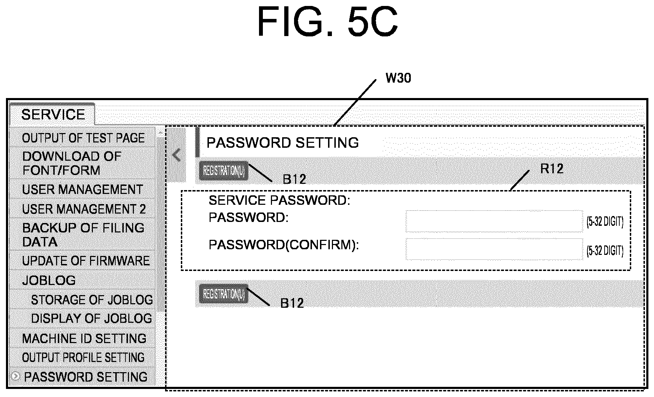

Prior to the description of an operation example according to the first embodiment, authentication processing of a maintenance user according to a conventional art will be described with reference to FIGS. 5A to 5C. FIG. 5A is a diagram illustrating a configuration example of a login screen W10 of a maintenance user. FIG. 5B is a diagram illustrating a configuration example of a maintenance screen W20 displayed on the display 13 (the operation inputter 15) by the controller 11 when the authentication processing of the maintenance user is successful. FIG. 5C is a diagram illustrating a configuration example of a maintenance password change screen W30 for accepting a change of a maintenance password.

The login screen W10 illustrated in FIG. 5A includes an authentication information input area R10 and a login button B10. The authentication information input area R10 is an input area for accepting input of a login name and a login password of the maintenance user. The maintenance user who attempts to log in to the image forming apparatus 10 inputs his/her login name and login password in the authentication information input area R10. The login button B 10 is a selection button for accepting a confirmation instruction of the input content to the authentication information input area R10. When a selection instruction of the login button B 10 by the maintenance user is accepted, the controller 11 executes the authentication processing for the maintenance user.

The maintenance screen W20 illustrated in FIG. 5B is a setting screen for providing a function necessary for maintenance management of the image forming apparatus 10 by the maintenance user who has successfully logged in to the image forming apparatus 10 (for example, printing of a test page or management of a job, a system log, or the like). The maintenance screen W20 includes a password setting button B50 for accepting a change instruction of the maintenance password. When a selection instruction of the password setting button B50 by the maintenance user is accepted, the controller 11 displays the maintenance password change screen W30 which will be described in the next drawing.

The maintenance password change screen W30 includes a password input area R12 and a registration (U) button B 12. The password input area R12 is an input area for accepting input of a changed password. The registration (U) button B 12 is a selection button for accepting a confirmation instruction of the input content to the password input area R12. When a selection instruction of the registration (U) button B12 by the maintenance user is accepted, the controller 11 stores the changed password input to the password input area R12 as the maintenance password.

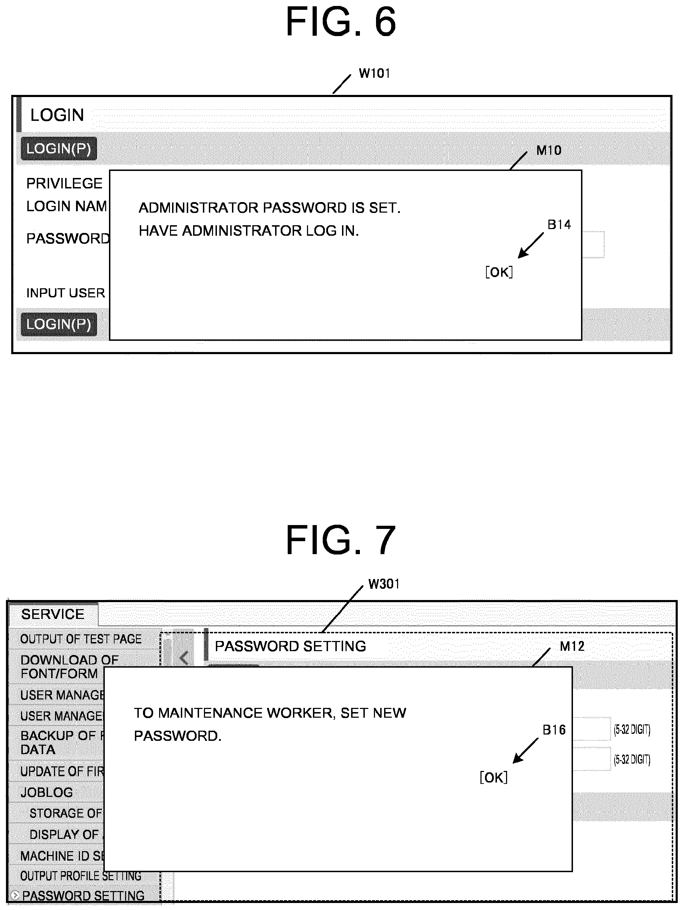

Next, the operation example according to the first embodiment will be described. FIG. 6 is a diagram illustrating, when the authentication processing for the maintenance user is the authentication processing according to Pattern A, a configuration example of a login screen W101 for displaying a message screen M10 indicating that the password of the administrator user (administrator password) has been set as the maintenance password. FIG. 6 illustrates an operation example corresponding to step S130 of FIG. 4.

The message screen M10 includes, for example, a message as display content "Administrator password is set. Have administrator (administrator user) log in." and an [OK] button B 14. When a selection instruction of the [OK] button B 14 is accepted, the controller 11 displays a login screen (not illustrated) for accepting authentication processing of the administrator user, and accepts input of authentication information by the administrator user. The controller 11 executes the authentication processing of the administrator user on the basis of the accepted authentication information. When the login of the administrator user is successful, the controller 11 skips the display of the maintenance screen W20 illustrated in FIG. 5B, and displays a maintenance password change screen W301 which will be described in the next drawing.

FIG. 7 is a diagram illustrating a configuration example of the maintenance password change screen W301 for displaying a message screen M12 prompting the maintenance user to change the maintenance password. FIG. 7 illustrates an operation example corresponding to step S170 of FIG. 4.

The message screen M12 includes, for example, a message as display content "To maintenance worker, set new password." and an [OK] button B 16. When a selection instruction of the [OK] button B 16 is accepted, the controller 11 ends the display of the message screen M12, displays the password input area R12 illustrated in FIG. 5C, and accepts input of a changed password. When the changed password is input by the maintenance user and a selection instruction of the registration button B12 is accepted, the controller 11 stores the changed password as the maintenance password.

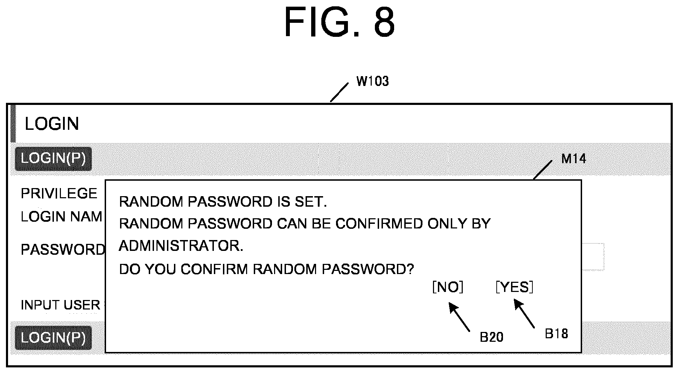

FIG. 8 is a diagram illustrating, when the authentication processing for the maintenance user is the authentication processing according to Pattern B, a configuration example of a login screen W103 for displaying a message screen M14 indicating that the random password that can be confirmed only by the administrator user has been set. FIG. 8 illustrates an operation example corresponding to step S200 of FIG. 4.

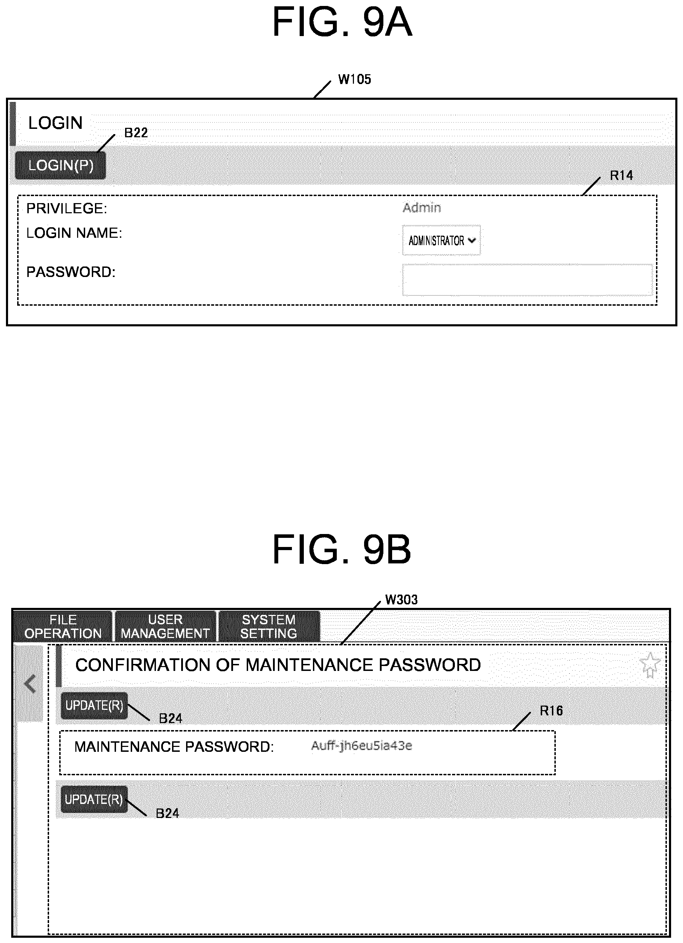

The message screen M14 includes, for example, a message as display content "Random password is set. Random password can be confirmed only by administrator. Do you confirm random password?", a [YES] button B 18, and a [NO] button B20. When a selection instruction of the [YES] button B18 is accepted, the controller 11 displays a login screen W105 for accepting authentication processing of the administrator user, which will be described in the next drawing FIG. 9A, and accepts input of authentication information by the administrator user. The controller 11 executes the authentication processing of the administrator user on the basis of the accepted authentication information. When the login of the administrator user is successful, the controller 11 displays a random password confirmation screen W303 including the random password, which will be described in the next drawing FIG. 9B.

FIG. 9A is a diagram illustrating a configuration example of the login screen W105 for accepting authentication processing of the administrator user. FIG. 9A illustrates an operation example corresponding to the processing of step S220 of FIG. 4. The login screen W105 includes an authentication information input area R14 and a login button B22. The authentication information input area R14 is an input area for accepting input of a login name and a login password of the administrator user. The administrator user who attempts to log in to the image forming apparatus 10 inputs his/her login name and login password in the authentication information input area R14. The login button B22 is a selection button for accepting a confirmation instruction of the input content to the authentication information input area R14. When a selection instruction of the login button B22 by the administrator user is accepted, the controller 11 executes the authentication processing for the administrator user.

FIG. 9B is a diagram illustrating a configuration example of the random password confirmation screen W303. FIG. 9B illustrates an operation example corresponding to the processing of step S240 of FIG. 4. The random password confirmation screen W303 includes a random password (maintenance password) display area R16 and an update (R) button B24. The random password (maintenance password) display area R16 is a display area for displaying a random password that can be confirmed only by the administrator user who has successfully logged in. The update (R) button B24 is a selection button for accepting a confirmation instruction of the random password by the administrator user. When a selection instruction of the update (R) button B24 by the administrator user is accepted, the controller 11 skips the display of the maintenance screen W20 illustrated in FIG. 5B, and changes the maintenance password by executing the processing in step S160 and the subsequent steps of FIG. 4.

As described above, according to the first embodiment, the security in authentication processing of a maintenance user in an image forming apparatus can be enhanced by applying, as the authentication processing for the maintenance user, the authentication processing of Pattern A (A password of an administrator user is set as a password of the maintenance user (maintenance password), and the administrator user is requested to input the password at the time of login authentication of the maintenance user) or Pattern B (A password that can be confirmed only by an administrator user (for example, a random password in which character strings constituting the password are arranged at random) is set as a password of the maintenance user (maintenance password), and the administrator user is requested to confirm (input) the password at the time of login authentication of the maintenance user).

### 2 Second Embodiment

In the first embodiment, a form in which whether to apply the authentication processing of Pattern A or Pattern B as the authentication processing for the maintenance user is set in advance before the initial setting wizard is activated (for example, at the time of factory shipment) has been described. A second embodiment has a form that causes the end user to select whether to apply password setting according to the authentication processing of Pattern A or Pattern B as one setting item included in the initial setting wizard.

The functional configuration of the image forming apparatus 10 and the processing flow of the authentication processing for the maintenance user or the like according to the second embodiment are the same as those of the first embodiment, and thus the description thereof will be omitted here.

### 2.1 Operation Example

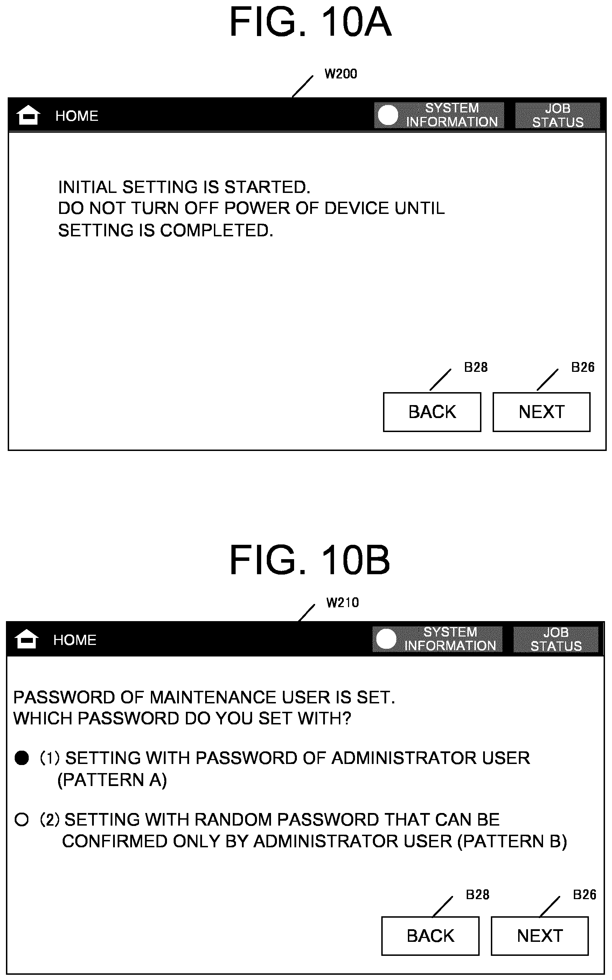

FIGS. 10A to 10C are diagrams illustrating configuration examples of a wizard screen configuring the initial setting wizard according to the second embodiment.

FIG. 10A is a configuration example of a wizard screen W200 for notifying the end user of the start of the initial setting wizard. The wizard screen W200 includes a message as notification content "Initial setting is started. Do not turn off power of device until setting is completed.", a next button B26, and a back button B28. The end user who has confirmed the start of the initial setting wizard can proceed with the initial setting wizard by selecting the next button B26. When a selection instruction of the back button B28 by the end user is accepted, the controller 11 ends the initial setting wizard.

FIG. 10B is a configuration example of a wizard selection screen W210 for causing the end user to select whether to apply the password setting according to the authentication processing of Pattern A or Pattern B in the authentication processing for the maintenance user. The wizard selection screen W210 is configured such that the password setting of "(1) Setting with password of administrator user (Pattern A)" or "(2) Setting with random password that can be confirmed only by administrator user (Pattern B)" can be selected. The end user can confirm the authentication processing (password setting) to be applied in the authentication processing for the maintenance user by selecting the next button B26 after selecting the desired password setting. The authentication processing (password setting) selected by the end user is stored in the setting information storage area 197 described with reference to FIG. 3, and is read at the time of the authentication processing of the maintenance user. When a selection instruction of the back button B28 by the end user is accepted, the controller 11 causes the screen to transition to the previous wizard screen without performing the confirmation processing of the authentication processing selected by the end user.

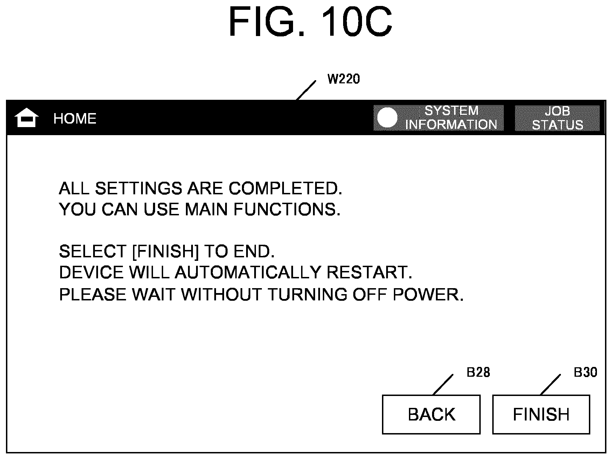

FIG. 10C is a configuration example of a wizard screen W220 for notifying the end user of the end of the initial setting wizard. The wizard screen W220 includes a message as notification content "All settings are completed. You can use main functions. Select [FINISH] to end. Device will automatically restart. Please wait without turning off power.", a finish button B30, and the back button B28. The end user who has confirmed the end of the initial setting wizard can end the initial setting wizard by selecting the finish button B30. When a selection instruction of the back button B28 by the end user is accepted, the controller 11 causes the screen to transition to the previous wizard screen.

As described above, according to the second embodiment, in addition to the effect of the first embodiment, the end user can select whether to apply password setting according to the authentication processing of Pattern A or Pattern B as one setting item included in the initial setting wizard. Therefore, regarding the security enhancement, an image forming apparatus having higher operability can be provided.

The present disclosure is not limited to the above-described embodiments, and various modifications can be made. That is, embodiments obtained by combining technical means appropriately modified within the claimed subject-matter are also included.

Although the above-described embodiments have been separately described for convenience of description, it is needless to say that the embodiments may be combined and executed within a technically allowable range.

In addition, the program that operates in each device in the embodiments is a program that controls a CPU or the like (a program that causes a computer to function) so as to realize the functions of the above-described embodiments. Information to be handled by each device is temporarily accumulated in a temporary storage device (for example, RAM) during processing, and then stored in various storage devices such as a read only memory (ROM) and an HDD, and is read, corrected, and written by the CPU as needed.

Here, a computer-readable non-transitory recording medium in which a program is recorded in an information processing device may be any of a semiconductor medium (for example, a ROM or a non-volatile memory card), an optical recording medium or magnetooptical recording medium (for example, a digital versatile disc (DVD), a magnetooptical disc (MO), a mini disc (MD), a compact disc (CD), or a Blu-ray (registered trademark) disc (BD)), a magnetic recording medium (for example, a magnetic tape or a flexible disk). In this case, the program recorded in the recording medium is read by a computer of the information processing device and executed by the computer, so that not only the functions of the above-described embodiments are realized, but also the functions of the present disclosure are realized by processing in cooperation with an operating system, another application program, or the like on the basis of an instruction of the program.

In addition, when the program is distributed to the market, the program can be stored in a portable recording medium and distributed, or can be transferred to a server computer connected via a network such as the Internet. In this case, it is needless to say that a storage device of the server computer is also included in the present disclosure.

Moreover, each functional block or various features of the device used in the above-described embodiments may be implemented and executed by an electric circuit, such as an integrated circuit or a plurality of integrated circuits. An electric circuit designed to realize the functions described herein may include a general purpose processor, a digital signal processor (DSP), an application specific integrated circuit (ASIC), a field programmable gate array (FPGA), or another programmable logic device, a discrete gate or transistor logic, a discrete hardware component, or a combination thereof. The general purpose processor may be a microprocessor or a conventional processor, controller, microcontroller, or state machine. The above-described electric circuit may be configured by a digital circuit or by an analog circuit. Furthermore, when an integrated circuit technology that replaces the current integrated circuits appears due to the progress of the semiconductor technology, one or more aspects of the present disclosure can use a new integrated circuit according to the technology.

### REFERENCE SIGNS LIST

11 controller
13 display
15 operation inputter
17 communicator
19 storage
191 activation control program
1911 wizard setting program
192 control program
193 display control program
194 login authentication program
195 maintenance management program
196 job control program
197 setting information storage area
21 image processor
211 image former
213 image inputter

## Claims

1. An image forming apparatus (10) comprising:
a display (13);
one or more storage devices (19) that store authentication information of a user of the image forming apparatus (10); and
one or more controllers (11) that control authentication processing for the user, wherein
the one or more controllers (11):
control the display (13) such that, when authentication information of an administrator user who performs management of the image forming apparatus (10) is stored as authentication information of a maintenance user who performs maintenance of the image forming apparatus (10), a notification that requests input of the authentication information by the administrator user is displayed on an authentication screen for the maintenance user;
control the display (13) such that, when authentication processing for the maintenance user is successful, a notification prompting a change of the authentication information of the maintenance user is displayed;
store the changed authentication information of the maintenance user when the authentication information of the maintenance user is changed; and
control the display (13) such that, when the authentication information of the administrator user is not stored as the authentication information of the maintenance user, the notification that requests the input of the authentication information by the administrator user is not displayed on the authentication screen for the maintenance user.

2. The image forming apparatus (10) according to claim 1, wherein
the one or more controllers (11) control the display (13) such that, when authentication information that can be confirmed only by the administrator user is stored as the authentication information of the maintenance user, a notification that requests confirmation, by the administrator user, of the authentication information that can be confirmed only by the administrator user is displayed.

3. The image forming apparatus (10) according to claim 1, wherein
the one or more controllers (11) restrict the request of the input of the authentication information by the administrator user after the authentication information of the maintenance user is changed.

4. The image forming apparatus (10) according to claim 2, wherein
the one or more controllers (11) set either storing the authentication information of the administrator user as the authentication information of the maintenance user or storing the authentication information that can be confirmed only by the administrator user as the authentication information of the maintenance user when setting processing at the time of first activation of the image forming apparatus (10) is executed.

5. The image forming apparatus (10) according to claim 1 or 2, wherein
the one or more controllers (11) restrict screen transition from a screen for changing the authentication information of the maintenance user to another screen until the authentication information of the maintenance user is changed.

6. A user authentication method comprising:
storing authentication information of a user of an image forming apparatus (10);
controlling a display (13) such that, when authentication information of an administrator user who performs management of the image forming apparatus (10) is stored as authentication information of a maintenance user who performs maintenance of the image forming apparatus (10), a notification that requests input of the authentication information by the administrator user is displayed on an authentication screen for the maintenance user;
controlling the display (13) such that, when authentication processing for the maintenance user is successful, a notification prompting a change of the authentication information of the maintenance user is displayed;
storing the changed authentication information of the maintenance user when the authentication information of the maintenance user is changed; and
controlling the display (13) such that, when the authentication information of the administrator user is not stored as the authentication information of the maintenance user, the notification that requests the input of the authentication information by the administrator user is not displayed on the authentication screen for the maintenance user.

## Patentansprüche

1. Bilderzeugungsgerät (10), aufweisend:
eine Anzeige (13);
eine oder mehrere Speichervorrichtungen (19), die eine Authentifizierungsinformation eines Nutzers des Bilderzeugungsgeräts (10) speichern; und
einen oder mehrere Controller (11), die eine Authentifizierungsverarbeitung für den Nutzer steuern, wobei
der eine oder die mehreren Controller (11):
die Anzeige (13) so steuern, dass, wenn eine Authentifizierungsinformation eines Administrator-Nutzers, der eine Verwaltung des Bilderzeugungsgeräts (10) durchführt, als Authentifizierungsinformation eines Wartungs-Nutzers, der eine Wartung des Bilderzeugungsgeräts (10) durchführt, gespeichert ist, eine Mitteilung, die eine Eingabe der Authentifizierungsinformation durch den Administrator-Nutzer anfordert, auf einem Authentifizierungsbildschirm für den Wartungs-Nutzer angezeigt wird;
die Anzeige (13) so steuern, dass, wenn eine Authentifizierungsverarbeitung für den Wartungs-Nutzer erfolgreich ist, eine Mitteilung, die eine Änderung der Authentifizierungsinformation des Wartungs-Nutzers anregt, angezeigt wird;
die geänderte Authentifizierungsinformation des Wartungs-Nutzers speichern, wenn die Authentifizierungsinformation des Wartungs-Nutzers geändert ist; und
die Anzeige (13) so steuern, dass, wenn die Authentifizierungsinformation des Administrator-Nutzers nicht als die Authentifizierungsinformation des Wartungs-Nutzers gespeichert ist, die Mitteilung, die die Eingabe der Authentifizierungsinformation durch den Administrator-Nutzer anfordert, nicht auf dem Authentifizierungsbildschirm für den Wartungs-Nutzer angezeigt wird.

2. Bilderzeugungsgerät (10) nach Anspruch 1, wobei
der eine oder die mehreren Controller (11) die Anzeige (13) so steuern, dass, wenn eine Authentifizierungsinformation, die nur durch den Administrator-Nutzer bestätigt werden kann, als die Authentifizierungsinformation des Wartungs-Nutzers gespeichert ist, eine Mitteilung, die eine Bestätigung, durch den Administrator-Nutzer, der Authentifizierungsinformation, die nur durch den Administrator-Nutzer bestätigt werden kann, angezeigt wird.

3. Bilderzeugungsgerät (10) nach Anspruch 1, wobei
der eine oder die mehreren Controller (11) die Anforderung einer Eingabe der Authentifizierungsinformation durch den Administrator-Nutzer beschränken, nachdem die Authentifizierungsinformation des Wartungs-Nutzers geändert ist.

4. Bilderzeugungsgerät (10) nach Anspruch 2, wobei
der eine oder die mehreren Controller (11) entweder ein Speichern der Authentifizierungsinformation des Administrator-Nutzers als die Authentifizierungsinformation des Wartungs-Nutzers oder ein Speichern der Authentifizierungsinformation, die nur durch den Administrator-Nutzer bestätigt werden kann, als die Authentifizierungsinformation des Wartungs-Nutzers einstellen, wenn eine Verarbeitung zur Einstellung zum Zeitpunkt einer ersten Aktivierung des Bilderzeugungsgeräts (10) ausgeführt wird.

5. Bilderzeugungsgerät (10) nach Anspruch 1 oder 2, wobei
der eine oder die mehreren Controller (11) einen Bildschirmübergang von einem Bildschirm zum Ändern der Authentifizierungsinformation des Wartungs-Nutzers zu einem anderen Bildschirm beschränken, bis die Authentifizierungsinformation des Wartungs-Nutzers geändert ist.

6. Nutzerauthentifizierungsverfahren, aufweisend:
Speichern einer Authentifizierungsinformation eines Nutzers eines Bilderzeugungsgeräts (10);
Steuern einer Anzeige (13), so dass, wenn eine Authentifizierungsinformation eines Administrator-Nutzers, der eine Verwaltung des Bilderzeugungsgeräts (10) durchführt, als Authentifizierungsinformation eines Wartungs-Nutzers, der eine Wartung des Bilderzeugungsgeräts (10) durchführt, gespeichert ist, eine Mitteilung, die eine Eingabe der Authentifizierungsinformation durch den Administrator-Nutzer anfordert, auf einem Authentifizierungsbildschirm für den Wartungs-Nutzer angezeigt wird;
Steuern der Anzeige (13), so dass, wenn eine Authentifizierungsverarbeitung für den Wartungs-Nutzer erfolgreich ist, eine Mitteilung, die eine Änderung der Authentifizierungsinformation des Wartungs-Nutzers anregt, angezeigt wird;
Speichern der geänderten Authentifizierungsinformation des Wartungs-Nutzers, wenn die Authentifizierungsinformation des Wartungs-Nutzers geändert ist; und
Steuern der Anzeige (13), so dass, wenn die Authentifizierungsinformation des Administrator-Nutzers nicht als die Authentifizierungsinformation des Wartungs-Nutzers gespeichert ist, die Mitteilung, die die Eingabe der Authentifizierungsinformation durch den Administrator-Nutzer anfordert, nicht auf dem Authentifizierungsbildschirm für den Wartungs-Nutzer angezeigt wird.

## Revendications

1. Appareil de formation d'image (10) comprenant :
un afficheur (13) ;
un ou plusieurs dispositifs de stockage (19) qui stockent des informations d'authentification d'un utilisateur de l'appareil de formation d'image (10) ; et
un ou plusieurs contrôleurs (11) qui contrôlent le traitement d'authentification pour l'utilisateur, dans lequel
les un ou plusieurs contrôleurs (11) :
commandent l'afficheur (13) de sorte que, lorsque des informations d'authentification d'un utilisateur administrateur qui effectue la gestion de l'appareil de formation d'image (10) sont stockées en tant qu'informations d'authentification d'un utilisateur de maintenance qui effectue la maintenance de l'appareil de formation d'image (10), une notification qui demande la saisie des informations d'authentification par l'utilisateur administrateur s'affiche sur un écran d'authentification pour l'utilisateur de maintenance ;
commandent l'afficheur (13) de sorte que, lorsque le traitement d'authentification pour l'utilisateur de maintenance est réussi, une notification invitant à modifier les informations d'authentification de l'utilisateur de maintenance s'affiche ;
stockent les informations d'authentification modifiées de l'utilisateur de maintenance lorsque les informations d'authentification de l'utilisateur de maintenance sont modifiées ; et
commandent l'afficheur (13) de sorte que, lorsque les informations d'authentification de l'utilisateur administrateur ne sont pas stockées en tant qu'informations d'authentification de l'utilisateur de maintenance, la notification qui demande la saisie des informations d'authentification par l'utilisateur administrateur ne s'affiche pas sur l'écran d'authentification pour l'utilisateur de maintenance.

2. Appareil de formation d'image (10) selon la revendication 1, dans lequel
les un ou plusieurs contrôleurs (11) commandent l'afficheur (13) de sorte que, lorsque des informations d'authentification qui peuvent être confirmées uniquement par l'utilisateur administrateur sont stockées en tant qu'informations d'authentification de l'utilisateur de maintenance, une notification qui demande la confirmation, par l'utilisateur administrateur, des informations d'authentification qui peuvent être confirmées uniquement par l'utilisateur administrateur s'affiche.

3. Appareil de formation d'image (10) selon la revendication 1, dans lequel
les un ou plusieurs contrôleurs (11) restreignent la demande de saisie des informations d'authentification par l'utilisateur administrateur après modification des informations d'authentification de l'utilisateur de maintenance.

4. Appareil de formation d'image (10) selon la revendication 2, dans lequel
les un ou plusieurs contrôleurs (11) sont configurés soit pour stocker les informations d'authentification de l'utilisateur administrateur en tant qu'informations d'authentification de l'utilisateur de maintenance, soit pour stocker les informations d'authentification qui ne peuvent être confirmées que par l'utilisateur administrateur en tant qu'informations d'authentification de l'utilisateur de maintenance lorsque le traitement de réglage au moment de la première activation de l'appareil de formation d'image (10) est exécuté.

5. Appareil de formation d'image (10) selon la revendication 1 ou 2, dans lequel
les un ou plusieurs contrôleurs (11) restreignent la transition d'écran d'un écran de modification des informations d'authentification de l'utilisateur de maintenance vers un autre écran jusqu'à ce que les informations d'authentification de l'utilisateur de maintenance soient modifiées.

6. Procédé d'authentification d'utilisateur comprenant :
le stockage d'informations d'authentification d'un utilisateur d'un appareil de formation d'image (10) ;
la commande d'un afficheur (13) de sorte que, lorsque des informations d'authentification d'un utilisateur administrateur qui effectue la gestion de l'appareil de formation d'image (10) sont stockées en tant qu'informations d'authentification d'un utilisateur de maintenance qui effectue la maintenance de l'appareil de formation d'image (10), une notification qui demande la saisie des informations d'authentification par l'utilisateur administrateur s'affiche sur un écran d'authentification pour l'utilisateur de maintenance ;
la commande de l'afficheur (13) de sorte que, lorsque le traitement d'authentification pour l'utilisateur de maintenance est réussi, une notification invitant à modifier les informations d'authentification de l'utilisateur de maintenance s'affiche ;
le stockage des informations d'authentification modifiées de l'utilisateur de maintenance lorsque les informations d'authentification de l'utilisateur de maintenance sont modifiées ; et
la commande de l'afficheur (13) de sorte que, lorsque les informations d'authentification de l'utilisateur administrateur ne sont pas stockées en tant qu'informations d'authentification de l'utilisateur de maintenance, la notification qui demande la saisie des informations d'authentification par l'utilisateur administrateur ne s'affiche pas sur l'écran d'authentification pour l'utilisateur de maintenance.
